(19) Europäisches Patentamt

European Patent Office

Office européen des brevets

(11) **EP 0 911 780 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.⁷: **G08G 1/09**, G08G 1/127

(21) Anmeldenummer: **98117857.7**

(22) Anmeldetag: **21.09.1998**

(54) **Datenübertragungsverfahren zwischen Verkehrstelematikgeräten**

Method of data transmission between telematic traffic devices

Procédé de transmission de données entre des appareils télématiques pour la circulation

(84) Benannte Vertragsstaaten:
**DE FR GB IT SE**

(30) Priorität: **30.09.1997 DE 19743257**

(43) Veröffentlichungstag der Anmeldung:
**28.04.1999 Patentblatt 1999/17**

(73) Patentinhaber: **ROBERT BOSCH GMBH**
**70442 Stuttgart (DE)**

(72) Erfinder:
• **Hessing, Bernd**
**31188 Holle (DE)**
• **Hartkopp, Oliver**
**31228 Peine (DE)**

(56) Entgegenhaltungen:
**WO-A-97/34431**     **DE-A- 19 755 875**

EP 0 911 780 B1

**Beschreibung**

STAND DER TECHNIK

Die vorliegende Erfindung betrifft ein Datenübertragungsverfahren zum Übertragen von Datenbotschaften, welche jeweils eine vorbestimmte Gesamtanzahl von Blöcken zur Übermittlung von Nachrichten, insbesondere von Nachrichten zwischen Verkehrstelematik-Endgeräten, welche über GSM-SMS-Luftschnittstellen Daten übertragen, aufweisen.

Obwohl auf beliebige Datenübertragungsverfahren anwendbar, werden die vorliegende Erfindung sowie die ihr zugrundeliegende Problematik in bezug auf Nachrichten zwischen Verkehrstelematik(VT)-Geräten, welche über GSM-SMS-Luft-schnittstellen Daten übertragen, erläutert. Verkehrstelematik bedeutet dabei den Austausch von Verkehrsinformationen und/oder Verkehrsleitinformationen im allgemeinsten Sinne.

Ein solches Verfahren ist aus der WO 97/34431 bekannt.

Momentan werden weltweit eine ganze Reihe unterschiedliche verkehrstelematische Dienste und entsprechende Geräte entwickelt.

Zur Kommunikation zwischen der VT-Zentrale und beliebigen VT-Endgeräten sind verschiedene Datenstandards definiert worden.

Viele der in Europa verwendeten Systeme haben gemeinsam, daß sie den "Short Message Service"(SMS) -Datenfernübertragungsmechanismus im GSM-Mobilfunknetz nutzen, um VT-Anwendungsnachrichten in einzelne SMS-Nachrichten einzubetten.

Im GSM-Mobilfunknetz ist der Short Message Service" (SMS) mit den verwendeten Datenformaten in der Spezifikation GSM-03.40 festgelegt. Mit Hilfe des SMS können beliebige Anwendungsdaten (ud = user data) bis zu einer Länge von 1120 Bit gesichert über eine Punkt-zu-Punkt-Verbindung übertragen werden.

Zur. Verwendung für VT-Dienste müssen die Datenformate und Übertragungsabläufe in einheitlicher Art und Weise definiert werden. Die Spezifikationen der Luftschnittstelle verwenden den Begriff der ADP-Nachricht (ADP = Application Data Protocoll), worunter alle in GSM-SMS eingebetteten spezifizierten VT-Nachrichten fallen. Allen diesen Spezifikationen ist gemeinsam, daß sie den Gebrauch des in der GSM-03.40 definierten ud-Bereichs für spezielle verkehrstelematische Anwendungen festlegen. Dabei ist es üblich, daß diese Spezifikationen den Gebrauch eines beliebigen Datenbereichs spezifizieren. Die Anwendungen können daher auch mit beliebigen anderen Datenfernübertragungsverfahren, und nicht nur mit GSM-SMS, funktionieren.

Die ud-Bereiche sind bei den bekannten Schnittstellen sequentiell interpretierbar aufgebaut. Die Auswertung beginnt mit dem ersten Datenwort bzw. Datenblock, wird gefolgt vom zweiten Datenwort, läuft von dort weiter und endet mit dem letzten Datenwort. Die Länge der Nachricht und daher die Erkennung des letzten Datenworts erfolgt durch einen Vergleich der Dateninhalte mit der Spezifikation. Beim Beginn der Auswertung.einer derartigen ADP-Nachricht ist somit keine Kenntnis über die Gesamtlänge der Nachricht bzw. über die Gesamtanzahl von Datenworten bzw. Datenblöcken erforderlich.

Nachteilhafterweise sind wegen der in der Regel nur beschränkt verfügbaren und teuren Übertragungskapazität im GSM-Mobilfunknetz in den Spezifikationen keine Datenbereiche für Zusatzinformationen, wie z.B. Inbetriebsetzungsinformationen oder sonstige Betriebsinformationen, wie z.B. Positionsdaten oder Geschwindigkeitsdaten der Fahrzeuge, vorgesehen.

Hinsichtlich der Inbetriebsetzung (IBS) ist es erwünscht, beliebige Daten zwischen dem Fahrzeug und der VT-Zentrale auszutauschen, welche vom Endgerät und vom betreffenden VT-Dienst abhängig sind. Es ist daher nicht zweckmäßig, die Inbetriebsetzungsinformationen allgemeingültig zu spezifizieren.

Hinsichtlich der sonstigen Betriebsinformationen, wie z.B. Positionsdaten oder Geschwindigkeitsdaten der Fahrzeuge, ist eine typische Funktion einer VT-Zentrale die Erfassung und Bewertung von aktuellen und prognostizierten Verkehrslage. Ein hierzu vorgeschlagenes Verfahren ist die fahrzeugbasierte Messung von Daten, deren Übermittlung an die VT-Zentrale und die dort durchgeführte Auswertung. Dieses Verfahren wird als "Floating Car Data" (FCD)-Verfahren bezeichnet.

Der Stand der Technik für die fahrzeugseitige Realisierung eines FCD-Verfahrens ist in der DE 196 06 258 C1 nebst einigen Randaspekten beschrieben.. Demgemäß findet eine fahrfahrzeugseitigeVorverarbeitung der FC-Daten statt, um die Belastung des potentiell teuren Kommunikationskanals gering zu halten. So gelingt es, die Kommunikationskosten verhältnismäßig gering zu halten, doch nachteilig ist der durch . die fahrzeugseitige Komplexität hervorgerufene Material-, Test- und Verifikationsaufwand in den VT-Geräten.

VORTEILE DER ERFINDUNG

Das erfindungsgemäße Datenübertragungsverfahren weist den bedeutenden Vorteil auf, daß zusätzliche Daten unabhängig von der jeweiligen VT-Anwendung ausgetauscht werden können, ohne daß hierfür die standardisierten Protokolle erweitert und die Protokollsoftware entsprechend geändert werden müssen.

Die der vorliegenden Erfindung zugrundeliegende Idee besteht darin, daß ein bisher ungenutzter Bereich in den Datenbotschaften systematisch genutzt wird bzw. ein gewisser Bereich für eine solche Nutzung stets reserviert bleibt.

In den Unteransprüchen finden sich vorteilhafte Weiterbildungen und Verbesserungen des in Anspruch 1 angegebenen Datenübertragungsverfahrens.

Gemäß einer bevorzugten Weiterbildung weist die Datenbotschaft einen speziellen Bereich, insbesondere einen Vorsatzbereich, zur übermittlung der Gesamtanzahl auf, wobei die Gesamtanzahl vor dem Übertragen der jeweiligen Datenbotschaft in dem speziellen Bereich gespeichert wird. Dieser Bereich ist bei der Einbettung in GSM-SMS zwangsweise und immer vorhanden. Insbesondere dort sind also keine Änderungen hinsichtlich Spezifikation und existierender Software erforderlich.

Gemäß einer weiteren bevorzugten Weiterbildung wird als erster Bereich der erste bis n-te Block der Datenbotschaft verwendet.

Gemäß einer bevorzugten Weiterbildung wird als zweiter Bereich der (udl-p)-te bis (udl)-te Block der Datenbotschaft verwendet.

Gemäß einer bevorzugten Weiterbildung werden zur Auswertung der Datenbotschaften folgende Schritte durchgeführt: sequentielles Lesen und Interpretieren der ersten Nachricht und gleichzeitiges Ermitteln der ersten Anzahl ausgehend vom vorbestimmten ersten Block; Ermitteln der Gesamtanzahl; Vergleichen der ermittelten ersten Anzahl plus der zweiten Anzahl mit der ermittelten Gesamtanzahl; und Lesen und Interpretieren der zweiten Nachricht, falls die ermittelte erste Anzahl plus der zweiten Anzahl kleiner oder gleich der ermittelten Gesamtanzahl ist.

Gemäß einer bevorzugten Weiterbildung wird die zweite Nachricht vom udl-ten Block ausgehend sequentiell gelesen und interpretiert.

Gemäß einer bevorzugten Weiterbildung wird der zweite Bereich mit p Blöcken in jeder Datenbotschaft für die zweite Nachricht reserviert.

Gemäß einer bevorzugten Weiterbildung sind die Datenbotschaften SMS-Datenbotschaften im GSM-Mobilfunknetz mit der Spezifikation GSM-03.40.

Gemäß einer bevorzugten Weiterbildung werden in der zweiten Nachricht Inbetriebsetzungsdaten eines Fahrzeugs an eine VT-Zentrale oder umgekehrt übermittelt. Dies hat den Vorteil., daß die Inbetriebsetzungsdaten individuell festgelegt werden können.

Gemäß einer bevorzugten Weiterbildung werden in der zweiten Nachricht FC-Daten eines Fahrzeugs, insbesondere Positionsdaten und/oder Geschwindigkeitsdaten des Fahrzeugs, an eine VT-Zentrale übermittelt. Dies hat den Vorteil, daß sich die Gewinnung, Vorverarbeitung und Übertragung geeigneter FC-Daten für eine zentralenbasierte Verkehrslagenerkennung besonders einfach und kostengünstig in den VT-Endgeräten realisieren läßt. Insbesondere müssen also für die Verkehrslagenerfassung keine separaten Datenbotschaften mit entsprechenden ADP-Nachrichten gesendet werden.

Gemäß einer bevorzugten Weiterbildung werden die Datenbotschaften in vom jeweiligen Einsatzprofil abhängigen, im wesentlichen regelmäßigen Zeitintervallen t übertragen und werden in der zweiten Nachricht ein Anfangs-FC-Datenwert und darauf jeweils eine Folge von Differenz-FC-Datenwerten übertragen. Dabei kann in GSM-SMS ein absolut regelmäßiges Zeitintervall t nicht garantiert werden, sondern lediglich eine Abschätzung für das mittlere Zeitintervall t aus dem Einsatzprofil erhalten werden. Das erfindungsgemäße.Verfahren ist jedoch nicht auf solche Zeitintervalle t beschränkt.

Dabei ergibt sich hinsichtlich der FC-Datenübertragung der Vorteil, daß an Orten und zu Zeiten erhöhter Verkehrsprobleme auch ein erhöhter Bedarf an der Nutzung "normaler" VT-Dienste herrscht, also kleinere Zeitintervalle t vorgesehen sind. Somit erfolgt die Erkennung von als problematisch eingeschätzten Situationen (Stau, dichter Verkehr) praktisch automatisch durch den Fahrzeugführer.

Gemäß einer bevorzugten Weiterbildung weist der Anfangs-FC-Datenwert eine vorbestimmte Anzahl von g Bits auf, wobei die niederwertigsten f Bits einen zugehörigen Fehler bezeichnen. die Anzahl von übertragenen Bits des Anfangs-FC-Datenwerts g - f beträgt und die Anzahl von übertragenen Bits d für jeden Differenz-FC-Datenwerte folgendermaßen ermittelt wird:

$$d = \text{Bitanzahl} (v_{max} * t) - f$$

wobei $v_{max}$ die Maximalgeschwindigkeit des Fahrzeugs ist. „Bitanzahl'" bezeichnet eine Funktion zur Ermittlung der Anzahl von Bits des Ausdrucks ($v_{max}$ * t). Dabei sind die Einheiten zu beachten, denn die geographischen Koordinaten sind üblicherweise in Grad, Minuten, Sekunden usw. angegeben. Eventuell kann also zur Ermittlung dieser Anzahl von Bits eine nicht-lineare Umrechnung notwendig sein.

Gemäß einer bevorzugten Weiterbildung wird ein FC-Datenwerte-Speicher mit mindestens der Speicherkapazität von B Bits, wobei B die den p Blöcken der zweiten Nachricht entsprechende Bitanzahl ist, bereitgestellt. Dann erfolgt ein Messen und Speichern des Anfangs-FC-Datenwerts mit g - f Bits; ein Berechnen eines FC-Datenwert-Meßintervalls $t_{mess}$ nach folgender Formel:

$$t_{mess} = t/[B- (g - f)]/d$$

und ein Messen und Speichern eines jeweiligen Differenz-FC-Datenwerts mit d Bits pro Meßintervall $t_{mess}$.

Durch diese erfindungsgemäße Implementierung des Datenübertragungsverfahrens zur Übermittlung von FC-Daten läßt sich die Funktion der FCD-Zentralen dadurch unterstützen, daß für Kunden und VT-Dienstanbieter keine Zusatzkosten für die Übertragung der FC-Daten anfallen. Dabei sind in den VT-Endgeräten nur minimale Anforderungen bezüglich Speicher- und Verarbeitungskapazität zu erfüllen. Die Menge der in einer FCD-Zentrale verfügbaren Datensätze wird drastisch erhöht. Damit ist eine schnellere und zuverlässigere Erfassung von Verkehrslagen möglich. Beispielsweise kann die Bildung von Staus früher erkannt, und deren Auflösung kann früher gemeldet werden.

Gemäß einer bevorzugten Weiterbildung umfassen die FC-Datenwerte Positionsdatenwerte, welche mit einer GPS-Einrichtung ermittelt werden.

ZEICHNUNGEN

Ausführungsbeispiele der Erfindung sind in den.Zeichnungen dargestellt und in der nachfolgenden Beschreibung näher erläutert.

Es zeigen:

Fig. 1 eine schematische Darstellung eines Verkehrstelematiksystems, welches eine erste Ausführungsform des erfindungsgemäßen Datenübertragungsverfahrens anwendet;

Fig. 2 eine schematische Darstellung einer Datenbotschaft nach der SMS-GSM-03.40-Spezifikation, welche gemäß einer ersten Ausführungsform des erfindungsgemäßen Datenübertragungsverfahrens übermittelt wird;

Fig. 3 einen Fließplan der Schritte der Auswertung der Datenbotschaft von Fig. 2;

Fig. 4 eine schematische Darstellung eines weiteren Verkehrstelematiksystems, welches eine zweite Ausführungsform des erfindungsgemäßen Datenübertragungsverfahrens anwendet; und

Fig. 5 eine schematische Darstellung von FC-Daten, welches bei der zweiten Ausführungsform des erfindungsgemäßen Datenübertragungsverfahrens blockweise in der zweiten Nachricht übermittelt werden.

BESCHREIBUNG DER AUSFÜHRUNGSBEISPIELE

In den Figuren bezeichnen gleiche Bezugszeichen gleiche. oder funktionsgleiche Komponenten.

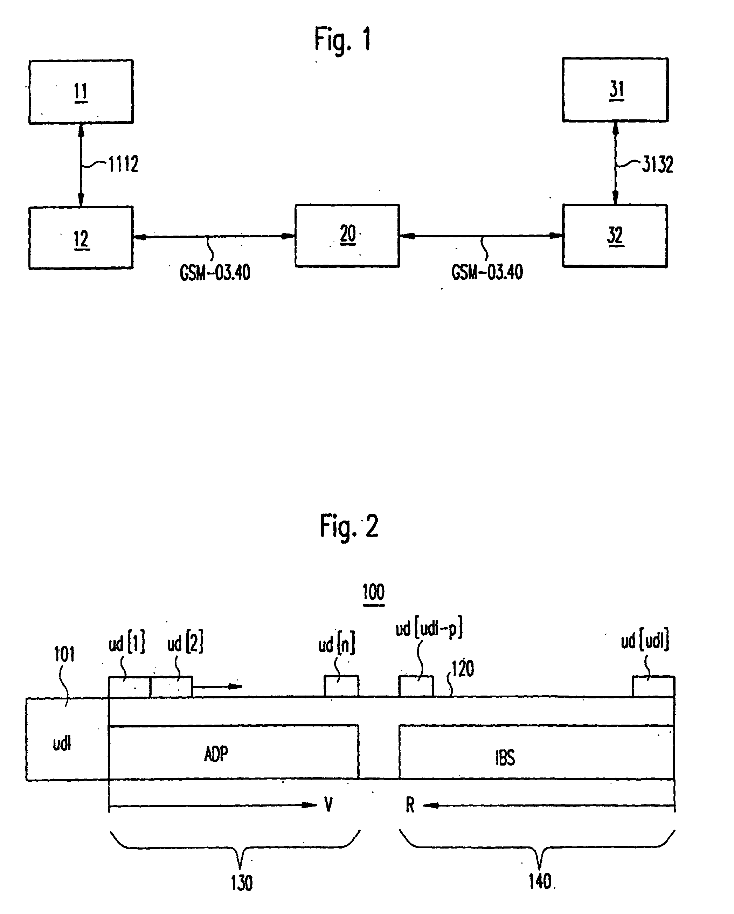

Figur 1 zeigt eine schematische Darstellung eines Verkehrstelematiksystems, welches eine erste Ausführungsform des erfindungsgemäßen Datenübertragungsverfahrens verwendet.

In Figur 1 bezeichnet 11 ein VT-Gerät, 12 einen GSM-SMS-Adapter, 1112 eine Verbindung zwischen dem VT-Gerät 11 und dem GSM-SMS-Adapter 12, 20 ein GSM-Netz, 32 einen GSM-SMS-Adapter, 31 eine VT-Zentrale und 3132 eine Verbindung zwischen der VT-Zentrale 31 und dem GSM-SMS-Adapter 32.

In dem derart aufgebauten Verkehrstelematiksystem werden VT-Dienste abgewickelt, welche eine Gerätefunktion beinhalten, die im VT-Gerät 11 implementiert ist, und welche eine Zentralenfunktion beinhalten, welche in der VT-Zentrale 31 implementiert ist. Der zur Dienstabwicklung notwendige Datenaustausch wird über die GSM-SMS-Adapter 12, 32 sowie das GSM-Netz 20 auf der Basis eines vorbestimmten Dienstestandards abgewickelt.

Dazu wird typischerweise eine ADP-Nachricht mit einer Dienstanforderung bzw. einem Dienst-Request. im ud-Bereich einer SMS-Datenbotschaft vom VT-Gerät 11 an die VT-Zentrale 31 gesendet, dort bearbeitet und mit einer Dienstantwort bzw. einem Dienst-Reply an das VT-Gerät 11 zurückgesendet.

Figur 2 ist eine schematische Darstellung einer entsprechenden SMS-Datenbotschaft nach der SMS-GSM-03.40-Spezifikation, welche bei der ersten Ausführungsform des erfindungsgemäßen Datenübertragungsverfahrens zwischen dem VT-Gerät 11 und der VT-Zentrale 31 über das GSM-Netz 20 ausgetauscht wird.

In Figur 2 bezeichnet ein 100 allgemein die SMS-Datenbotschaft. Die SMS-Datenbotschaft 100 umfaßt einen Vorsatzbereich (Header) 101 und einen SMS- Benutzerdatenbereich bzw. Nachrichtenbereich 120. Der Nachrichtenbereich 120 enthält eine vorbestimmte Gesamtanzahl udl von Blöcken ud[1], ..., ud[udl] zur Übermittlung der Nachrichten.

Bei einer üblichen Dienstanforderung wird eine ADP-Nachricht mit einer vorgegebenen Maximallänge in einem ersten Bereich 130, welcher zweckmäßigerweise zusammenhängend ist, bestehend aus den n Blöcken ud[1] bis ud[n], gespeichert und übertragen. Ebenso wird bei einer Dienstantwort . eine entsprechende ADP-Nachricht in dem ersten Bereich 130 gespeichert und übertragen.

Dabei ist die Anzahl n von Blöcken der zu übermittelnden ADP-Nachricht üblicherweise kleiner als die Gesamtanzahl udl des Nachrichtenbereichs 120 der SMS-Datenbotschaft 100. Die Spezifikationen der Luftschnittstelle sehen allerdings auch eine Einbettung von langen Nachrichten in mehreren SMS-Daten-botschaften 100 vor. Mit anderen Worten ist es immer möglich, einen Bereich von p Blöcken in einer SMS-Datenbotschaft zu reservieren. Für die Dienstanforderungen und Dienstantworten steht dann immer noch die oben erwähnte Maximallänge abzüglich dieser p reservierten Blöcke zur Verfügung.

Erfindungsgemäß wird der Bereich 140.des Nachrichtenbereichs 120 der SMS-Datenbotschaft 100, welcher nicht von der ADP-Nachricht belegt ist, zur Übertragung von beliebigen Zusatzinformationen genutzt. Beim hier beschriebenen ersten Ausführungsbeispiel sind diese Zusatzinformationen Inbetriebsetzungsdaten IBS, beim weiter unten beschriebenen zweiten Ausführungsbeispiel FC-Daten.

Im Vorsatzbereich 101 der SMS-Datenbotschaft 100 nach Figur 2 wird die Länge udl des Nachrichtenbereichs 120 jeweils mit übertragen. Dies ermöglicht eine einfache Erkennung des Vorhandenseins entsprechender Zusatzinformationen, d.h. Inbetriebsetzungsdaten im vorliegenden ersten Ausführungsbeispiel. Dabei sei bemerkt, daß zur reinen Auswertung von Dienstanforderungen und Dienstantworten das Mitsenden der Größe udl im Vorsatzbereich 101 nicht notwendig ist, da sich die jeweilige Länge der ADP-Nachrichten automatisch aus den interpretierten Inhalten der jeweiligen ADP-Nachricht ergibt.

Bei der Codierung von Inbetriebsetzungsdaten IBS können das VT-Gerät 11 und die VT-Zentrale 31 die eigentlichen Nutzdaten, d.h. die ADP-Nachricht, daher ohne Notwendigkeit einer Änderung der Software durch die übliche Interpretation der ADP-Nachricht ausgehend vom ersten Block ud [1] des Nachrichtenbereichs 120 erkennen. Das Vorhandensein der Zusatzinformationen, d.h. der IBS-Nachricht, wird dadurch erkannt, daß der Nachrichtenbereich 120 der Datenbotschaft 100 größer als die für die vollständige Interpretation der ADP-Nachricht benötigte Anzahl n von Blöcken ist, d.h. die Beziehung udl > n gilt.

Wie in Figur 2 durch die Pfeile V und R angedeutet, ist die ADP-Nachricht in Vorwärtsrichtung V ausgehend vom ersten Block ud[1] und ist die IBS-Nachricht in Rückwärtsrichtung R ausgehend vom letzten Block ud[udl] angeordnet. Dies hat den Vorteil, daß zwischen den beiden Nachrichten ein kleiner Pufferbereich verbleiben kann, welcher beispielsweise eine variierende Länge der ADP-Nachrichten berücksichtigen kann, wobei stets ein Bereich mit p Blöcken für die Zusatzinformationen reserviert bleibt.

Es ist natürlich auch möglich, die IBS-Nachricht in Vorwärtsrichtung V ausgehend vom Block ud[udl-p] anzuordnen. Wichtig ist, daß als Bezugspunkt ud[udl] vorgesehen ist.

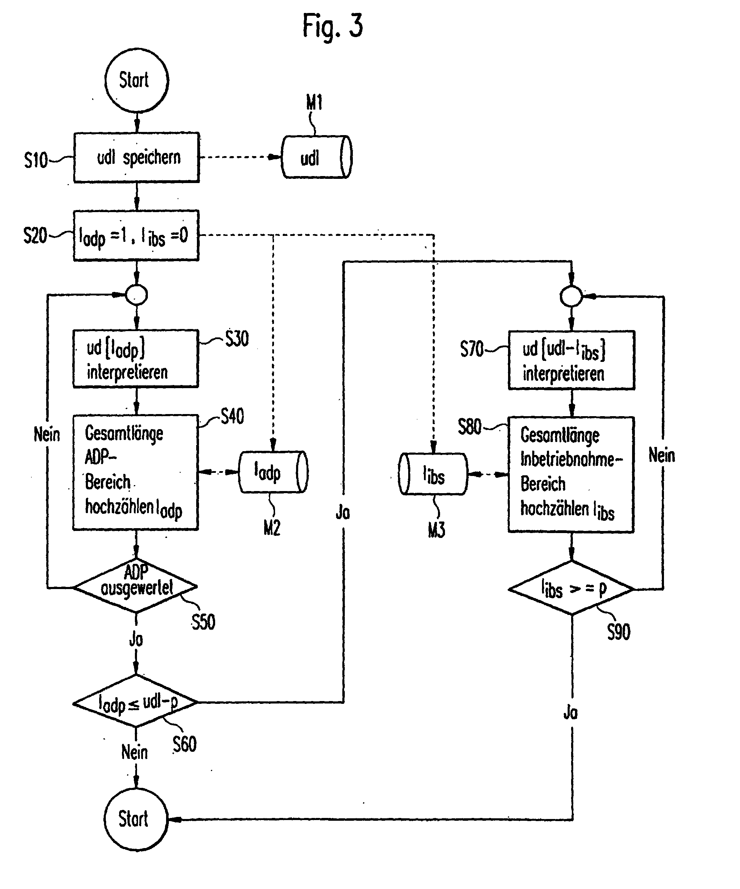

Figur 3 zeigt einen Fließplan der Schritte eines Algorithmus zur Auswertung der Datenbotschaft 100 von Figur 2.

In Figur 3 bezeichnen S10 bis S90 die verschiedenen Auswertungsschritte, $l_{adp}$ einen Laufindex für die Blöcke der ADP-Nachricht, $l_{ibs}$ einen Laufindex für die Blöcke der IBS-Nachricht, udl die Gesamtanzahl von Blöcken des Nachrichtenbereichs 120 der SMS -Datenbotschaft,100, p die Anzahl der Blöcke der IBS-Nachricht, M1 einen lokalen Speicher für die Gesamtanzahl udl, M2 einen lokalen Speicher für den Laufindex $l_{adp}$ und M3 einen lokalen Speicher für den Laufindex $l_{ibs}$.

Im Schritt S10 wird zunächst die Gesamtanzahl udl im Speicher M1 gespeichert. Darauf wird im Schritt S20 die Laufvariable $l_{adp}$ auf 1, und die Laufvariable $l_{ibs}$ wird auf 0 gesetzt. Im Schritt S30 wird der Block ud[1] gelesen und interpretiert. Danach wird im Schritt S40 der Laufindex $l_{adp}$ um 1 inkrementiert. und der inkrementierte Laufindex $l_{adp}$ im Speicher M2 gespeichert. Im Schritt S50 wird entschieden, ob die ADP-Nachricht vollständig ausgewertet ist oder nicht. Falls nein, springt die Verarbeitung zurück zum Schritt S30. Falls ja, wird im Schritt S60 geprüft, ob der Laufindex $l_{adp} \leq$ udl - p ist. Falls nein, wird die Bearbeitung beendet, da keine zweite Nachricht mit einer Anzahl p von Blöcken im.Nachrichtenbereich 120 der SMS-Datenbotschaft 100 enthalten ist. Falls ja, d.h. eine zweite Nachricht (IBS-Nachricht) mit einer Anzahl p von Blöcken ist im Nachrichtenbereich 120 der SMS-Nachrichtenbotschaft 100 enthalten, dann springt das Programm zum Schritt S70. Im Schritt S70 wird zunächst der letzte Block ud[udl] des Nachrichtenbereichs 120 der Datenbotschaft 100 gelesen und interpretiert. Darauffolgend wird im Schritt S80 der Laufindex $l_{ibs}$ um 1 inkrementiert und der inkrementierte Laufindex $l_{ibs}$ im Speicher M3 gespeichert. Anschließend wird im Schritt S90 ermittelt, ob der Laufindex $l_{ibs}$ größer oder gleich der Anzahl.p ist. Falls nein, wird der vorhergehende Block ud [udl-1] des Nachrichtenbereichs 120 gelesen und interpretiert. Dies wird solange fortgeführt, bis der Block ud [udl-p] erreicht ist. Dann wird die Prüfung im Schritt S90 mit ja beantwortet, und die Verarbeitung wird beendet. Wie oben gesagt, wäre prinzipiell ein Lesen und Interpretieren der IBS-Nachricht in Vorwärtsrichtung V ebenfalls möglich.

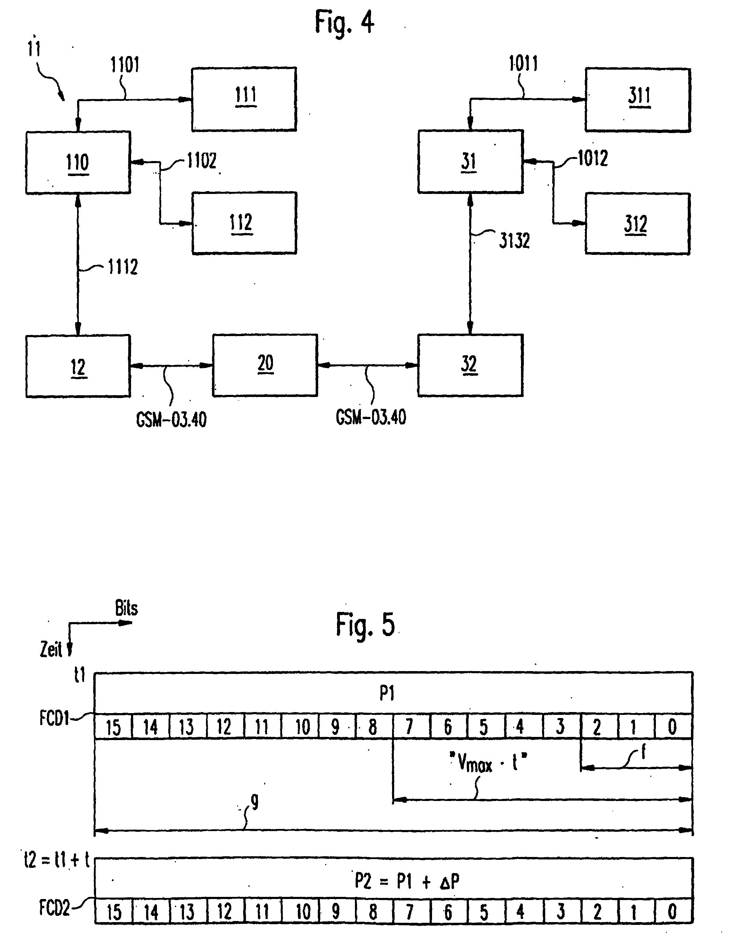

Figur 4 zeigt eine schematische Darstellung eines weiteren Verkehrstelematiksystems, welches eine zweite Ausführungsform des erfindungsgemäßen Datenübertragungsverfahrens anwendet.

Wie dort dargestellt, umfaßt das Verkehrstelematiksystem nach Figur 4 ein VT-Gerät 11 mit einer zentralen Verarbeitungseinheit 110, einem GPS(Globales Positionierungssystem)-Gerät 111 und einem Speicher 112. 1101 bezeichnet eine Verbindung zwischen der zentralen Verarbeitungseinheit 110 und dem GPS-Gerät 111, und 1102 bezeichnet eine Verbindung zwischen der zentralen Verarbeitungseinheit 110 und dem Speicher 112.

Weiterhin ist die VT-Zentrale 31 des Verkehrstelematiksystems nach Figur 4 mit einer FCD-Betriebseinheit 311 über eine Verbindung 1011 verbunden und ist weiterhin mit einer ADP-Betriebseinheit 312 über eine Verbindung 1012 verbunden.

Die ADP-Betriebseinheit 312 verwaltet die normalen ADP-Dienste, wohingegen die FCD-Betriebseinheit 311 eine Einrichtung zur Erkennung von Verkehrslagen aufgrund von FC-Daten, welche vom Fahrzeug übermittelt werden, aufweist.

Das GPS-Gerät 111 ist im gezeigten Fall ein üblicher GPS-Empfänger zur Ermittlung der geographischen Länge und Breite, kann bei einem. komplexeren Gerät allerdings auch ein Navigationssystem mit digitaler Karte und Koppelortung sein.

Im VT-Gerät 11 von Figur 4 sind verschiedene VT-Anwendungen installiert. Typische Anwendungen sind Verkehrsinformationsdienst; Orientierungsdienst, dynamische Zielführung, usw. Welche genauen Anwendungen dies sind, ist für die Verwendung des erfindungsgemäßen Datenübertragungsverfahrens unerheblich. Für diese Anwendungen läßt sich ein typisches Einsatzprofil abschätzen.Aus dem Einsatzprofil können die Häufigkeit und die benötigte Datenmenge der vom Fahrzeug an die VT-Zentrale 31 sendenden Datenbotschaften entnommen werden. Aus diesen Berechnungen ergibt sich ein typischerweise nutzbarer Datenbereich zur Einbettung von Zusatzinformationen, und zwar hier von FC-Datenwerten.

Im vorliegenden Fall sind die FC-Daten Positionsdaten des Fahrzeugs, welche in Figur 5 näher erläutert sind.

Figur 5 zeigt zwei FC-Datenwerte.FCD1 und FCD2 zur Zeit t1 bzw. zur Zeit t2 gleich t1 + t. Die FC-Datenwerte sind Positionsmessungen P1 und P2 = P1 + $\Delta$P. Die Qualität der Positionsmessungen ist dabei durch die Genauigkeit der GPS-Ortung (Ortungsfehler f) und die Genauigkeit der Darstellung einer Position (g Bits) bestimmt. Die Genauigkeit der Ortung ist ein. Maß für die Abweichung der gemessenen Posi tion gegenüber der tatsächlichen Fahrzeugposition. Die Genauigkeit der Darstellung einer Position läßt sich in der Einheit Grad, Winkelminuten, Winkelsekunden und'Bruchteile hiervon angeben. Im vorliegenden Fall beträgt die Genauigkeit der Positionsmessung 16 Bit und der Ortungsfehler f 3 Bit.

Aus einer Aneinanderreihung solcher Positionsmessungen lassen sich nach Übermittlung der FC-Daten an die VT-Zentrale 31 und von dort an die FCD-Betriebseinheit 311 abgeleitete Größen, wie zum Beispiel die tatsächliche Fahrtrichtung und Fahrtgeschwindigkeiten, als Mikroprofil der Fahrzeugbahn ableiten. Dabei sind diese Werte um so mehr gemittelt also aussageschwächer, je weiter die Zeitabstände der gemessenen Positionen auseinander liegen. Je kürzer die Zeitabstände sind und je mehr Positionsmeßwerte vorhanden sind, desto genauer ist aus den Werten die Fahrtverlaufserkennung in der zentralen seitigen FCD-Betriebseinheit 211 möglich.

Ein hierzu denkbares Verfahren ist als "Map-Matching" bekannt. Die Übertragung von hintereinanderliegenden Positionsmessungen zur Ortsbestimmung wird teilweise auch als "Perlenkettenverfahren" bezeichnet. Dadurch soll ausgedrückt werden, daß das Fahrzeug am jeweiligen Standort Perlen ausgibt. Die Perlen bilden eine Kette, an der der Wegverlauf erkennbar ist.

Abhängig vom Fahrzeugtyp und der oben erwähnten Genauigkeit der Ortung sind zwischen zwei aufeinanderfolgenden Positi onsmessungen im zeitlichen Abstand t nur maximale Unterschiede möglich, welche sich aus der Beziehung $v_{max} * t$ ergeben, wobei $v_{max}$ die Maximalgeschwindigkeit des Fahrzeugs ist.

Dieser maximale Unterschied hat eine Bitanzahl d zuverlässiger Bits, welche folgendermaßen darstellbar ist:

$$d = \text{Bitanzahl} (v_{max} * t) - f$$

also Bit 3, 4, 5, 6 und 7 in Figur 5.

Bei der Übertragung einer Perlenkette von Positionsmessungen wird erfindungsgemäß nur eine vollständige Position mit g - f Bit und für alle weiteren Positionen jeweils eine Positionsdifferenz mit d Bit angegeben. Dies bietet eine große Ersparnis hinsichtlich der Länge der zu übertragenen Daten.

In Figur 5, in der dieser Zusammenhang an den zwei hintereinander gemessenen Positionsmessungen P1 und P2 verdeutlicht ist, ist der Einfachheit halber nur jeweils ein Zahlenwert im Bitformat dargestellt. Wie den Fachleuten klar erscheint, werden die Positionen üblicherweise durch Paare von Zahlenwerten, nämlich geographische Länge und Breite, ausgedrückt.

Bei der zweiten Ausführungsform des erfindungsgemäßen Verfahrens wird im Speicher 112 ein kleiner Bereich der Größe des innerhalb einer SMS -Datenbotschaft 100 nicht genutzten Bereichs 140 reserviert. Dieser Speicherbereich wird genutzt, um zwischen zwei im Normalbetrieb vom Fahrzeug andie VT-Zentrale 31 im Zeitabstand t durchgeführten Datenübertragungen die entsprechenden Fahrprofile zu speichern und bei der folgenden Datenübertragung der VT-Zentrale 31 mitzuteilen.

Diese Fahrprofile bestehen aus Positionswerten, die mit einem in der VT-Zentrale 31 bekannten Abtastverfahren gewonnen werden. Daher kann die VT-Zentrale 31 die erwünschten Informationen zur Verkehrslage aus den übertragenen Positionsdaten ermitteln.

Im folgenden wird an Hand eines Beispiels erläutert, welche Meßintervalle $t_{mes}$ ein vorteilhaftes Abtastverfahren zwischen zwei aufeinanderfolgenden Übertragungen im Zeitabstand t vom Fahrzeug an die VT-Zentrale 31 verwendet.

Es sei angenommen, daß der Bereich 140 von Figur 2, also der ungenutzte Bereich des Nachrichtenbereichs 120 der SMS-Datenbotschaft 100 600 Bit beträgt. Dementsprechend beträgt auch die Mindestkapazität des Speichers 112 600 Bit. Für eine Anfangsposition (Länge, Breite) werden 26 Bit, d.h. 2 * 13 Bit, wobei sich 13 Bit aus (g - f) Bit ergibt, benötigt. Es verbleiben also 574 Bit. Die Positionsunterschiede sind durch 2 * 5 Bit, d.h. 2 * d Bit, also 10 Bit pro Messung darstellbar. Somit können zwischen zwei Datenübertragungen 57 Posi-tionsunterschiedwerte, nämlich 574 Bit/10 Bit, gespeichert werden. Beträgt das Zeitintervall t zwischen zwei Übertragungen 900 Sekunden, so ergibt sich das MeBintervall entsprechend 900 Sekunden geteilt durch 57 zu 15,78 Sekunden. Das Meßintervall $t_{mess}$ beträgt also vorzugsweise 15 Sekunden. Der verwendete Speicher 112 wird dabei zweckmäßigerweise nach dem FIFO-Prinzip gefüllt, so daß es keines Rücksetzens bedarf.

Zum Zeitpunkt einer Datenübertragung vom Fahrzeug an die VT-Zentrale 31 wird der Inhalt des Speichers 112 in den Bereich 140 des Nachrichtenbereichs 120 der SMS-Datenbotschaft 100 geschrieben und übertragen.

Die Werte für g, d und f sind vorteilhafterweise in einem (nicht gezeigten) ROM-Speicher abgelegt. In höherwertigen Geräten ist es zweckmäßig, diese Werte situationsabhängig von der VT-Zentrale 31 aus konfigurierbar zu gestalten.

In der VT-Zentrale 31 werden die übertragenen SMS-Datenbotschaften 100 empfangen und die darin enthaltenen Daten werden in FC-Daten und VT-Dienstdaten getrennt. Die FC-Daten werden bewertet und in eine für die Verkehrslage nutzbare Form umgesetzt. Hierzu werden die übertragenen Positionsmessungen in Geschwindigkeiten und Fahrtrichtungen umgesetzt (normiert). Weiterhin ist mittels des MAP-Matching eine Zuordnung zu einer Straße möglich. Ebenfalls ist eine Qualitätsbewertung der Daten zweckmäßig. Mit Hilfe von speziellen Verfahren erfolgt dann die Verkehrslageerfassung innerhalb der FCD-Betriebs-einheit 311.

Durch die Auswertung von vorhandenen oder zusätzlich über die FC-Daten angebrachten Informationen können mehrere Nachrichten ein und desselben Fahrzeugs miteinander in Verbindung gebracht werden. Die Möglichkeiten der Nutzung der Nachrichten zur Verkehrslageerkennung können dann in der VT-Zentrale 31 dadurch gesteigert werden, daß aus den Unterschieden zwischen zwei oder mehreren aufeinanderfolgenden Nachrichten zusätzliche Informationen abgeleitet werden.

Es bietet sich an, die innerhalb einer Gruppe SMS-Datenbotschaft übermittelte Telefonnummer zu nutzen. Auch sind in den Anwendungsdaten regelmäßig Informationen über den VT-Teilnehmer und evtl. Transaktionskennungen vorhanden. Diese können zur Herstellung von nachrichtenübergreifenden Zusammenhängen genutzt werden.

Die vorliegende Erfindung ermöglicht also, daß beliebige VT-Geräte zusätzlich zur Nutzung von dort residenten VT-Anwendungen auch die VT-Zentralen mit FC-Daten versorgen. Hierbei wird der zur Verfügung stehende nicht genutzte Datenbereich der VT-Nachrichten, also beispielsweise der oben beschriebene Bereich 140 in SMS-Datenbotschaften im GSM-SMS-Mobilfunknetz, verwendet.

Bei dem oben angegebenen einfachen und allgemeinen Verfahren zur Abtastung und Übertragung der Positionsdaten erfolgt eine Komprimierung der Daten durch die Entfernung eines feststehenden oder konfigurierbaren Ortungsfehlers f. Weiterhin erfolgt eine Komprimierung der Daten durch die Übertragung durch lediglich einer vollständigen Position und die anschließende Übertragung von feststehenden oder konfigurierbaren Differenzwerten zwischen den abgetasteten Positionen. Außer der Erfassung und Speicherung der Funktionsdaten sind keine weiteren Funktionen im VT-Gerät zur Datengewinnung erforderlich. Bei einer Übertragung einer beliebigen VT-Nachricht wird der ungenutzte Speicherplatz ermittelt und mit dem letzten gespeicherten Fahrprofil gefüllt. Es entstehen dadurch kein Zusatzkosten für den VT-Dienstanbieter oder für die VT-Endgeräte im Fahrzeug.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise muß die Gesamtanzahl udl nicht notwendigerweise im Vorsatzbereich übertragen werden, sondern kann auf andere Weise ermittelt werden, wie z.B. durch ein Stärtund ein Stoppbit. Es ist ebenfalls eine fest vereinbarte, nicht veränderliche Paketlänge bei paketorientierten Netzen möglich.

Auch muß die Zusatzinformation nicht unbedingt sequentiell interpretierbar sein, sondern kann ein beliebiges Format annehmen.

Weiterhin kann die Anzahl von Blöcken der zweiten Nachricht variabel gestaltet sein und muß nicht unbedingt einer reservierten Anzahl p entsprechen.

Die Einheit zur Datenfernübertragung ist im gezeigten Fall zwar ein GSM-Netz, kann aber auch jedes andere beliebige Funkgerät mit Möglichkeit zur mobilen Datenübertragung sein.

**EP 0 911 780 B1**

Datenübertragungsverfahren

| BEZUGSZEICHENLISTE: | |
|---|---|
| 11 | VT-Gerät |
| 12, 32 | GSM-SMS-Adapter |
| 1112 | Verbindung 11 - 12 |
| GSM-03.40 | GSM-Verbindung |
| 20 | Netz |
| 31 | VT-Zentrale |
| 100 | Datenbotschaft |
| 101 | Vorsatzbereich (Header) |
| 120 | SMS-user data(Benutzerdaten)Nachrichtenbereich |
| 130 | erster Bereich |
| 140 | zweiter Bereich |
| ud[...] | Nachrichtenblöcke |
| n | Länge ADP-Nachricht |
| p | Länge IBS-Nachricht |
| udl | Länge Nachrichtenbereich |
| V, R | Vorwärts-, Rückwärtsrichtung |
| S10 - S90 | Auswertungsschritte |
| M1 - M3 | Speicherzellen |
| $I_{adp}$ | Laufindex ADP-Nachricht |
| $I_{ibs}$ | Laufindex IBS-Nachricht |
| 110 | CPU von 11 |
| 111 | GPS von 11 |
| 112 | Speicher von 11 |
| 1101 | Verbindung 110 - 111 |
| 1102 | Verbindung 110 - 112 |
| 311 | FCD-Betriebseinheit |
| 312 | ADP-Betriebseinheit |
| 1011 | Verbindung 31 - 311 |
| 1012 | Verbindung 31 - 312 |
| g | Bitlänge Positionsdatenwerte |
| f | Bitlänge Meßfehler |
| " vmax * t" | Bitlänge max. Positionsdatendifferenz |
| FCD1 | 1. FCD-Wert |
| FCD2 | 2. FCD-Wert |
| P1 | Positionsdatenwert z. Zt. t1 |
| P2 = P1 + ΔP | Positionsdatenwert z. Zt. t2 |

**Patentansprüche**

1. Datenübertragungsverfahren zum Übertragen von Datenbotschaften (100), welche jeweils einen Bereich (120) mit einer vorbestimmten Gesamtanzahl (udl) von Blöcken (ud[1], ..., ud[udl]) zur Übermittlung von Nachrichten (ADP; IBS; FCD), insbesondere von Nachrichten zwischen Verkehrstelematik-Geräten (11, 31), welche über GSM-SMS-Luftschnittstellen (12, 32) übertragen werden, aufweisen, mit den Schritten:

   Speichern einer ersten Nachricht (ADP), welche eine erste Anzahl (n) von Blöcken aufweist, in einem vorbestimmten ersten Bereich (130) der jeweiligen Datenbotschaft (100), wobei die erste Anzahl (n) kleiner der Gesamtanzahl (udl) ist und die erste Anzahl (n) durch sequentielle Interpretation der ersten Nachricht (ADP) ermittelbar ist;

   Speichern einer zweiten Nachricht (IBS; FCD), welche eine zweite Anzahl (p) von Blöcken aufweist, in einem zweiten Bereich (140) der jeweiligen Datenbotschaft (100), wobei die Summe (n+p) der ersten und der zweiten Anzahl (n, p) kleiner oder gleich der Gesamtanzahl (udl) ist; und

   Übertragen der jeweiligen Datenbotschaft (100).

2. Datenübertragungsverfahren nach Anspruch 1, **dadurch gekennzeichnet, daß** die Datenbotschaft (100) einen speziellen Bereich (101), insbesondere einen Vorsatzbereich (101), zur Übermittlung der Gesamtanzahl (udl) aufweist, wobei die Gesamtanzahl (udl) vor dem Übertragen der jeweiligen Datenbotschaft (100) in dem speziellen Bereich gespeichert wird.

3. Datenübertragungsverfahren nach Anspruch 1 oder 2, **dadurch gekennzeichnet**, daß' als erster Bereich (130) der erste bis n-te Block(ud[1], ..., ud[n]) der Datenbotschaft (100) verwendet wird.

4. Datenübertragungsverfahren nach einem der vorhergehenden Ansprüche, **dadurch gekennzeichnet, daß** als zweiter Bereich der (udl-p)-te bis (udl)-te Block (ud[udl-p],..., ud[udl]) der Datenbotschaft (100) verwendet.wird.

5. Datenübertragungsverfahren nach einem der vorhergehenden Ansprüche, **dadurch gekennzeichnet, daß** zur Auswertung der Datenbotschaften (100) folgende Schritte (S10 - S90) durchgeführt werden:

   sequentielles Lesen und Interpretieren der ersten Nachricht (ADP) und gleichzeitiges Ermitteln der ersten Anzahl (n) (S10 - S50) ausgehend vom vorbestimmten ersten Block (ud[1]);

   Ermitteln der Gesamtanzahl (udl) (S10);

   Vergleichen der ermittelten ersten Anzahl (,n) plus der zweiten Anzahl (p) mit der ermittelten Gesamtanzahl (udl) (S60); und

   Lesen und Interpretieren der zweiten Nachricht (IBS; FCD), falls die ermittelte erste Anzahl (n) plus der zweiten Anzahl (p) kleiner oder gleich der ermittelten Gesamtanzahl (udl) ist (S70 - S90).

6. Datenübertragungsverfahren, nach einem der Ansprüche 4 oder 5, **dadurch gekennzeichnet, daß** die zweite Nachricht (IBS; FCD) vom udl-ten Block (ud[udl]) ausgehend sequentiell gelesen und interpretiert wird.

7. Datenübertragungsverfahren nach einem der vorhergehenden Ansprüche, **dadurch gekennzeichnet, daß** der zweite Bereich (140) mit p Blöcken in jeder Datenbotschaft (100) für die zweite Nachricht (IBS; FCD) reserviert wird.

8. Datenübertragungsverfahren nach einem der vorhergehenden Ansprüche, **dadurch gekennzeichnet, daß** die Datenbotschaften (100) SMS-Datenbotschaften im GSM-Mobilfunknetz mit der Spezifikation GSM-03.40 sind.

9. Datenübertragungsverfahren nach einem der vorhergehenden Ansprüche, **dadurch gekennzeichnet, daß** in der zweiten Nachricht (IBS; FCD).Inbetriebsetzungsdaten (IBS) eines Fahrzeugs an eine VT-Zentrale (31) oder umgekehrt übermittelt werden.

10. Datenübertragungsverfahren nach einem der vorhergehenden Ansprüche, **dadurch gekennzeichnet, daß** in der zweiten Nachricht (IBS; FCD) FC-Daten (FCD) eines Fahrzeugs, insbesondere Positionsdaten und/oder Geschwindigkeitsdaten des Fahrzeugs, an ,eine VT-Zentrale (31, 311, 312) übermittelt werden.

**11.** Datenübertragungsverfahren nach Anspruch 10, **dadurch gekennzeichnet, daß** die Datenbotschaften (100) in vom jeweiligen Einsatzprofil abhängigen, im wesentlichen regelmäßigen Zeitintervallen t übertragen werden und in der zweiten Nachricht (IBS; FCD) ein Anfangs-FC-Datenwert und darauf jeweils eine Folge von Differenz-FC-Datenwerten übertragen werden.

**12.** Datenübertragungsverfahren nach Anspruch 11, **dadurch gekennzeichnet, daß** der Anfangs-FC-Datenwert eine vorbestimmte Anzahl von g Bits aufweist, wobei die niederwertigsten f Bits einen zugehörigen Fehler bezeichnen, die Anzahl von übertragenen Bits des Anfangs-FC-Datenwerts g - f beträgt und die Anzahl von übertragenen Bits d für jeden Differenz-FC-Datenwerte folgendermaßen ermittelt wird:

$$d = \text{Bitanzahl} (v_{max} * t) - f$$

wobei $v_{max}$ die Maximalgeschwindigkeit des Fahrzeugs ist.

**13.** Datenübertragungsverfahren nach Anspruch 12, **gekennzeichnet durch** die Schritte;

Bereitstellen eines FC-Datenwerte-Speichers (112) mit mindestens der Speicherkapazität von B Bits, wobei B die den p Blöcken der zweiten Nachricht (IBS; FCD) entsprechende Bitanzahl ist;

Messen und Speichern des Anfangs-FC-Datenwerts mit g - f Bits;

Berechnen eines FC-Datenwert-Meßintervalls $t_{mess}$ nach folgender Formel:

$$t_{mess} = t/[B - (g - f)]/d$$

und Messen und Speichern eines jeweiligen Differenz-FC-Datenwerts im Fahrzeug mit d Bits pro Meßintervall $t_{mess}$.

**14.** Datenübertragungsverfahren nach einem der Ansprüche 10 bis 13, **dadurch gekennzeichnet, daß** die FC-Datenwerte (FCD1, FCD2) Positionsdatenwerte (P1, P2) umfassen, welche mit einer GPS-Einrichtung (111) ermittelt werden.


**Claims**

**1.** Data transmission method for transmitting data messages (100) which in each case have an area (120) with a predetermined total number (ud1) of blocks (ud[1], ..., ud[ud1]) for transmitting messages (ADP; IBS; FCD), particularly messages such as between traffic telematics devices (11, 31), which are transmitted via GSM-SMS air interfaces (12, 32), comprising the following steps:

storing a first message (ADP) which has a first number (n) of blocks, in a predetermined first area (130) of the respective data message (100), the first number (n) being less than the total number (ud1) and the first number (n) being determinable by sequential interpretation of the first message (ADP);

storing a second message (IBS; FCD) which has a second number (p) of blocks, in a second area (140) of the respective data message (100), the sum (n+p) of the first and of the second number (n, p) being less than or equal to the total number (ud1); and

transmitting the respective data message (100).

**2.** Data transmission method according to Claim 1, **characterized in that** the data message (100) has a special area (101), particularly a header area (101), for transmitting the total number (ud1), the total number (ud1) being stored in the special area before the respective data message (100) is transmitted.

3. Data transmission method according to Claim 1 or 2, **characterized in that** the first to nth block (ud[1], ..., ud[n]) of the data message (100) is used as the first area (130).

4. Data transmission method according to one of the preceding claims, **characterized in that** the (udl-p)th to (udl) th block (ud[ud1-p], ..., ud[udl]) of the data message (100) is used as the second area.

5. Data transmission method according to one of the preceding claims, **characterized in that** the following steps (S10 - S90) are performed for evaluating the data messages (100):

   sequentially reading and interpreting the first message (ADP) and simultaneously determining the first number (n) (S10 - S50) on the basis of the predetermined first block (ud[1]);

   determining the total number (udl) (S10) ;

   comparing the first number (n) determined plus the second number (p) with the total number (udl) determined (S60); and

   reading and interpreting the second message (IBS; FCD) if the first number (n) determined plus the second number (p) is less than or equal to the total number (udl) determined (S70 - S90).

6. Data transmission method according to one of Claims 4 or 5, **characterized in that** the second message (IBS; FCD) is read and interpreted sequentially starting with the udl-th block (ud[ud1]).

7. Data transmission method according to one of the preceding claims, **characterized in that** the second area (140) with p blocks is reserved for the second message (IBS; FCD) in each data message (100).

8. Data transmission method according to one of the preceding claims, **characterized in that** the data messages (100) are SMS data messages in the GSM mobile radio network with the specification GSM-03.40.

9. Data transmission method according to one of the preceding claims, **characterized in that** in the second message (IBS; FCD), start-up data (IBS) of a vehicle are transmitted to a traffic telematics centre (31) or vice versa.

10. Data transmission method according to one of the preceding claims, **characterized in that** in the second message (IBS; FCD), FC data (FCD) of a vehicle, particularly position data and/or speed data of the vehicle, are transmitted to a traffic telematics centre (31, 311, 312).

11. Data transmission method according to Claim 10, **characterized in that** the data messages (100) are transmitted in essentially regular time intervals t which depend on the respective profile usage, and in the second message (IBS; FCD), an initial FC data value and following this in each case a sequence of differential FC data values are transmitted.

12. Data transmission method according to Claim 11, **characterized in that** the initial FC data value has a predetermined number of g bits, the least significant f bits designating an associated error, the number of transmitted bits of the initial FC data value being g - f and the number of transmitted bits d for each differential FC data value being determined in the following manner:

$$d = \text{number of bits } (v_{max} * t) - f$$

where $v_{max}$ is the maximum speed of the vehicle.

13. Data transmission method according to Claim 12, **characterized by** the following steps:

   providing an FC data value memory (112) having at least the storage capacity of B bits, B being the number of bits corresponding to the p blocks of the second message (IBS; FCD);

   measuring and storing the initial FC data value with g - f bits;

calculating an FC data value measuring intercal $t_{meas}$ according to the following formula:

$$t_{meas} = t/[B - (g - f)]/d$$

and measuring and storing a respective differential FC data value in the vehicle with d bits per measuring interval $t_{meas}$.

**14.** Data transmission method according to one of Claims 10 to 13, **characterized in that** the FC data values (FCD1, FCD2) comprise position data values (P1, P2) which are determined by means of a GPS device (111).

**Revendications**

**1.** Procédé de transmission de données destiné à transmettre des messages de données (100) qui présentent chacun une zone (120) avec un nombre total (udl) prédéterminé de blocs (ud[1], ..., ud[ud1]) pour transmettre des informations (ADP ; IBS ; FCD), en particulier des informations entre des appareils pour télématique de circulation ( 11, 31) lesquelles sont transmises par des interfaces aériennes GSM-SMS (12, 32), avec les étapes suivantes :

- enregistrement d'une première information (ADP) qui présente un premier nombre (n) de blocs dans une première zone (130) prédéterminée du message de données (100) concerné, le premier nombre (n) étant inférieur au nombre total (udl) et le premier nombre (n) pouvant être établi par interprétation séquentielle de la première information (ADP),
- enregistrement d'une deuxième information (IBS ; FCD) qui présente un deuxième nombre (p) de blocs, dans une deuxième zone (140) du message de données (100) concerné, la somme (n + p) du premier et du deuxième nombre (n, p) étant inférieure ou égale au nombre total (udl) et
- transmission du message de données (100) concerné.

**2.** Procédé de transmission de données selon la revendication 1,
**caractérisé en ce que**
le message de données (100) présente une zone (101) spéciale, en particulier une zone de label de début (101), destinée à transmettre le nombre total (udl), le nombre total (udl) étant enregistré dans la zone spéciale avant la transmission du message de données (100) concerné.

**3.** Procédé de transmission de données selon la revendication 1 ou 2,
**caractérisé en ce que**
l'on utilise les blocs (ud[1], ..., ud[n]) du premier au n-ième du message de données (100) en tant que première zone (130).

**4.** Procédé de transmission de données selon l'une des revendications précédentes,
**caractérisé en ce que**
l'on utilise le bloc (ud[ud1-p], .... ud(udl]) du (ud1-p)-ième au (udl)-ième du message de données (100) en tant que deuxième zone.

**5.** Procédé de transmission de données selon l'une revendications précédentes,
**caractérisé en ce que**
l'on réalise les étapes suivantes (S10 - S90) pour interpréter les messages de données (100) :

- lecture séquentielle et interprétation de la première information (ADP) et établissement simultané du premier nombre (n) (S10 - S50) à partir du premier bloc prédéterminé (ud(1)).
- établissement du nombre total (udl) (S10),
- comparaison du premier nombre (n) établi plus le deuxième nombre (p) avec le nombre total (udl) (S60) établi et
- lecture et interprétation de la deuxième information (IBS ; FCD) si le premier nombre (n) établi plus le deuxième nombre (p) est inférieur ou égal au nombre total (udl) (S70 - S90) établi.

**6.** Procédé de transmission de données selon la revendication 4 ou 5,
**caractérisé en ce que**
la deuxième information (IBS ; FCD) est lue et interprétée séquentiellement à partir du udl-ième bloc (ud[udl]).

**7.** Procédé de transmission de données selon l'une revendications pré**cédentes,**
**caractérisé en ce que**
la deuxième zone (140) avec p blocs est réservée dans chaque message de données (100) pour la deuxième information (IBS ; FCD).

**8.** Procédé de transmission de données selon l'une des revendications précédentes,
**caractérisé en ce que**
les messages de données (100) sont des messages de données SMS dans le réseau de téléphonie mobile GSM avec la spécification GSM-03.40.

**9.** Procédé de transmission de données selon l'une revendications précédentes.
**caractérisé en ce que**
dans la deuxième information (IBS ; FCD) des données de mise en marche (IBS) d'un véhicule sont transmises à une centrale pour télématique de circulation (31) ou inversement.

**10.** Procédé de transmission de données selon l'une des revendications précédentes,
**caractérisé en ce que**
dans la deuxième information (IBS ; FCD), des données de code de fichier - CF - (FCD) d'un véhicule, en particulier des données de position et/ou des données de vitesse du véhicule, sont transmises à une centrale pour télématique de circulation (31, 311, 312).

**11.** Procédé de transmission de données selon la revendication 10,
**caractérisé en ce que**
les messages de données (100) sont transmis à des intervalles de temps t pratiquement réguliers et dépendant du profil d'utilisation donné et une valeur de données CF initiale et ensuite à chaque fois une séquence de valeur de données CF différentielle sont transmises dans la deuxième information (IBS ; FCD).

**12.** Procédé de transmission de données selon la revendication 11,
**caractérisé en ce que**
la valeur de données CF initiale présente un nombre prédéterminé de g bits, les f bits de plus petite valeur désignant une erreur correspondante, le nombre des bits transmis de la valeur de données CF initiale étant g - f et le nombre d de bits transmis pour chaque valeur de données CF différentielle étant donné par

$$d = \text{nombre de bits } (v_{max} * t) - f,$$

où $v_{max}$ est la vitesse maximale du véhicule.

**13.** °) Procédé de transmission de données selon la revendication 12,
**caractérisé par**
les étapes suivantes :

- mise à disposition d'une mémoire de valeurs de données CF (112) avec au moins une capacité de stockage de B bits, où B est le nombre de bits qui correspond aux p blocs de la deuxième information (IBS ; FCD),
- mesure et stockage de la valeur de données CF initiale avec g - f bits,
- calcul d'un intervalle de mesure de valeurs des données CF $t_{mess}$ selon la formule suivante ;

$$t_{mess} = t/[B - (g - f)]/d,$$

- et mesure et stockage d'une valeur de données CF différentielle concernée dans le véhicule avec d bits par intervalle de mesure $t_{mess.}$

**14.** Procédé de transmission de données selon l'une revendications 10 à 13,
**caractérisé en ce que**
les valeurs de données CF (FCD1, FCD2) comprennent des valeurs de données de position (P1, P2) qui sont établies avec une installation GPS (111).

## Fig. 1

## Fig. 2

## Fig. 3

Start

S10 — udl speichern - - - → udl    M1

S20 — $l_{adp} = 1$, $l_{ibs} = 0$

S30 — ud [$l_{adp}$] interpretieren

S70 — ud [udl−$l_{ibs}$] interpretieren

S40 — Gesamtlänge ADP-Bereich hochzählen $l_{adp}$ - - → $l_{adp}$   M2

S80 — Gesamtlänge Inbetriebnahme-Bereich hochzählen $l_{ibs}$ - - → $l_{ibs}$   M3

Nein

ADP ausgewertet — S50

Ja

$l_{ibs} >= p$ — S90

Nein

$l_{adp} \leq udl−p$ — S60

Ja

Nein

Ja

Start

## Fig. 4

## Fig. 5